# FASCICULE DE BREVET EUROPEEN

(11) **EP 1 093 076 B1**
(45) Date de publication et mention de la délivrance du brevet: **11.12.2013**
(21) Numéro de dépôt: 00402789.2
(22) Date de dépôt: 10.10.2000
(51) Int. Cl.: G06K 7/00

(54) **Dispositif d'identification et de gestion chronologiques à distance d'étiquettes**
Vorrichtung zur chronologischen Identifikation elektronischer Etiketten
Device for chronological identification of tags

(30) Priorité: 14.10.1999 FR 9912824
(43) Date de publication de la demande: 18.04.2001
(73) Titulaire: Commissariat à l'Énergie Atomique et aux Énergies Alternatives, 75015 Paris (FR)
(72) Inventeur: Reverdy, Jacques, 38920 Crolles (FR); Thomas, Thierry, 38760 Varces-Allieres et Risset (FR)
(74) Mandataire: Ilgart, Jean-Christophe

(56) Documents cités:
- EP-A- 0 568 066
- WO-A-98/32092
- GB-A- 2 335 573

## Description

Le sujet de l'invention est un procédé d'identification à distance d'étiquettes mobiles dans un champ d'interrogation, ainsi qu'un dispositif correspondant.

De nombreux domaines techniques font maintenant appel à l'identification à distance d'appareils émetteurs-récepteurs, dotés chacun d'un code particulier permettant de les distinguer. Ces appareils sont en principe reliés à un objet ou à un individu qu'ils permettent d'identifier, d'où le nom d'étiquettes qu'on leur donne couramment. On peut mentionner le contrôle d'accès de personnel par portique, le contrôle de passage d'animaux, l'identification de bagages ou d'objets sur un tapis roulant, de produits ou d'outils sur une chaîne de production, et la vente ou le péage automatique.

Quand les étiquettes sont approchées d'un appareil interrogateur, c'est-à-dire incluses dans son champ d'interrogation, elles sont amenées à lui indiquer leur code, après quoi divers échanges d'informations appelés "transactions" sont possibles entre l'appareil interrogateur et les étiquettes, selon l'application. Les étiquettes restent ordinairement mobiles pendant la transaction, leur porteur continuant de se déplacer devant l'appareil interrogateur, et font ce qu'on appelle une "transaction au vol". Si d'autres étiquettes passent alors par le champ d'interrogation, elles ne peuvent être interrogées qu'ensuite, ce qui fait apparaître le risque que certaines étiquettes ne soient jamais interrogées et traversent le champ d'interrogation sans avoir été détectées.

On a envisagé plusieurs façons concrètes de procéder à l'identification d'une pluralité d'étiquettes actives dans le champ d'interrogation : l'appareil interrogateur peut ainsi leur faire réciter leur code fragment par fragment, et inhiber chaque étiquette, c'est-à-dire la rendre provisoirement inactive, dès qu'elle ne fournit pas un fragment de code égal à une valeur demandée ; quand il ne reste plus qu'une étiquette active, sa transaction peut s'accomplir, puis l'appareil interrogateur retourne aux étiquettes inhibées, les rend de nouveau actives et reprend la récitation de leurs codes, en demandant d'autres valeurs de fragments afin d'en sélectionner une autre ; il recommence jusqu'à ce que toutes les étiquettes aient fourni leur code et que les transactions respectives aient été réalisées. Dans une autre façon d'interroger, chacune des étiquettes présentes se voit allouer un temps d'émission défini de façon aléatoire ou d'après un numéro inscrit en elle. Toutes les étiquettes qui émettent seules dans un temps d'émission spécifique peuvent être identifiées. Les autres étiquettes se voient allouer un nouveau temps d'émission. L'identification est terminée lorsque toutes les étiquettes ont pu émettre individuellement. Dans les deux cas, les étiquettes candidates à l'interrogation peuvent être soit toute étiquette présente dans le champ d'interrogation soit un lot d'étiquettes déterminé et présent dans le champ d'interrogation au début de la séquence d'identification. Dans ce dernier cas, ce sont alors les étiquettes du lot exclusivement qui sont rendues actives et interrogées, et les étiquettes arrivant en cours de séquence d'identification dans le champ d'interrogation feront partie du lot suivant. Chaque lot est formé soit quand le lot précédent a été épuisé (toutes ses étiquettes ayant été identifiées et traitées), soit après le traitement de certaines étiquettes du lot précédent ou un laps de temps déterminé ; les étiquettes du lot précédent qui n'ont pas été identifiées et traitées doivent alors faire partie du nouveau lot.

Certains algorithmes d'interrogation ont été proposés pour déchiffrer plus rapidement les codes ; on a ainsi proposé de lire les codes en commençant alternativement par le bit de poids le plus élevé et par le bit de poids le plus faible ; ces mesures permettent de ne pas privilégier toujours les mêmes étiquettes en fonction de la valeur de leur code, mais elles ne sont que des palliatifs car elles ne permettent pas d'accroître beaucoup la cadence de passage des étiquettes par le champ d'interrogation.

Parmi l'art antérieur intéressant, GB 2 335 573 A détaille un procédé dans lequel les étiquettes sont munies d'un code aléatoire et d'un compteur incrémenté dès que l'étiquette entre dans le champ d'interrogation, grâce à une succession de signaux S fournis par l'appareil interrogateur. Quand le nombre du compteur devient égal à celui du code, l'étiquette émet l'information désirée et l'interrogateur suspend l'émission des signaux S jusqu'à la fin de l'identification ou de l'échange d'information. Les risques de collision d'émission entre étiquettes sont alors très réduits, malgré la fréquence élevée à laquelle les signaux S peuvent être émis. Si d'aventure deux étiquettes ont le même code, l'interrogateur détecte le brouillage produit par la superposition des signaux des deux étiquettes, interrompt l'échange d'information et augmente les codes des deux étiquettes de nombres aléatoires qui diffèrent et décalent leurs interrogations. On se préoccupe plutôt d'éviter les collisions, c'est-à-dire les interrogations simultanées, que de fournir un critère rationnel d'ordre d'interrogation qui permet d'accroître la vitesse de passage des étiquettes en réduisant les risques de défauts de détection.

Dans EP 0 568 066 A, les étiquettes sont ici dépourvues de batterie mais chargées par l'énergie du signal d'interrogation, qui charge un condensateur des étiquettes fournissant une tension qui dépend de la distance de l'étiquette à l'appareil interrogateur. Cette circonstance est exploitée en programmant les étiquettes pour qu'elles ne deviennent actives et n'émettent l'information voulue que quand la tension de charge est entre des limites bien définies et relativement étroites S1 et S2.

Il n'y a pas de compteur de temps de présence qui s'initialise en entrant dans un champ de détection. Les étiquettes ne sont pas interrogées à un même endroit, mais au contraire à des endroits variables du champ d'interrogation, ce qui permet d'absorber des variations de débit d'arrivée des étiquettes et notamment si des étiquettes nombreuses arrivent presque en même temps. Le cas d'étiquettes simultanément à la même distance de l'appareil interrogateur n'est pas examiné.

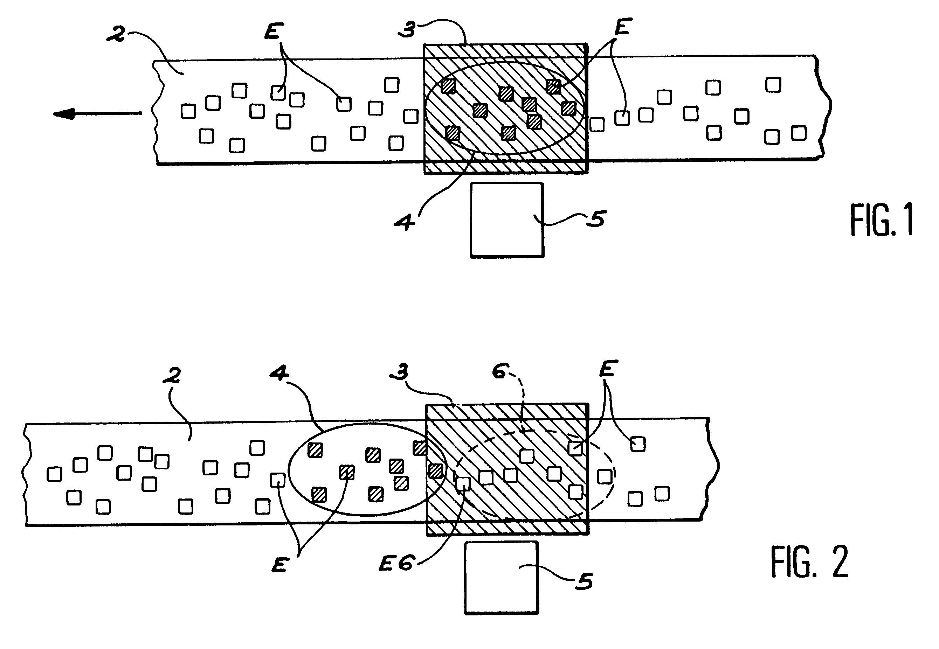

Enfin, WO 98/32 092 A concerne un dispositif de lecture d'étiquettes mobiles par paquets dans un champ d'interrogation, et où chaque étiquette émet périodiquement un message (figure 2) ; on se préoccupe cependant des risques d'interférence à l'émission simultanée de messages, qui peuvent conduire à ignorer complètement certaines des étiquettes. Une première mesure consiste à inhiber chaque étiquette une fois que son message a été lu. Une seconde mesure, qui perfectionne la précédente, consiste à faire envoyer par chaque étiquette un nombre binaire correspondant à l'énergie du champ d'interrogation qu'elle reçoit à l'instant d'émission du message, et à lui renvoyer ce nombre avec le signal d'inhibition quand le dispositif d'interrogation a lu le message. Ainsi, seule l'étiquette dont le message a été effectivement lu est inhibée : si une autre étiquette a envoyé son message en même temps, et même ce message est identique, le code d'énergie du champ sera différent, et cette étiquette restera active et pourra être lue plus tard.

L'objet de l'invention est précisément d'accroître cette cadence de passage autorisée sans risquer des absences de détection, en faisant coïncider substantiellement l'ordre d'identification des étiquettes avec l'ordre d'entrée dans le champ d'interrogation.

On agit concrètement en pourvoyant les étiquettes d'un compteur de temps qui est initialisé et démarre en arrivant dans le champ d'interrogation, et en interrogeant toujours l'étiquette dont le temps écoulé dans le champ d'interrogation est le plus important.

L'invention est ainsi relative à un procédé d'identification individuelle d'étiquettes dotées chacune d'un code particulier, où les étiquettes peuvent passer en groupe dans un champ d'interrogation d'un appareil interrogateur et où l'appareil interrogateur lit le code de chacune des étiquettes du groupe, caractérisé en ce que chaque étiquette du groupe subit une initialisation et un démarrage d'un compteur de temps de présence en entrant dans le champ d'interrogation, et en ce que les temps de présence des étiquettes du groupe sont comptés et l'appareil interrogateur lit d'abord le code de l'étiquette qui a le temps de présence le plus long ; elle est encore relative à un dispositif d'identification individuelle d'étiquettes comprenant un appareil interrogateur et des étiquettes dotées chacune d'un code particulier, des moyens d'émission et de réception de signaux étant compris sur l'appareil interrogateur et chacune des étiquettes, caractérisé en ce que chaque étiquette comprend un compteur de temps initialisé et démarrant quand il entre dans un champ d'interrogation de l'appareil interrogateur et des moyens pour sauvegarder temporairement des temps de présencedans ledit champ.

Ce procédé peut être greffé à tous les modes usuels d'identification d'étiquettes ou de lecture du code, et en particulier à ceux qu'on a mentionnés plus haut.

L'invention va maintenant être décrite en référence aux figures :
- la figure 1 et la figure 2 illustrent schématiquement un système d'interrogation d'étiquettes à deux instants successifs ;
- la figure 3 est un diagramme explicatif ; et
- la figure 4 illustre la configuration de l'appareillage.

Sur la figure 1, les étiquettes sont symbolisées par des carrés portant la référence E, leur lieu de passage par un couloir ou une piste 2, et le champ d'interrogation par un volume 3 s'étendant sur une partie de la longueur de la piste 2 ; on décrira ici plus particulièrement l'application de l'invention à un procédé par identification des étiquettes E par lots, où à certains instants, des étiquettes E présentes dans le champ d'interrogation 3 sont rendues actives : un lot 4 d'étiquettes E regroupe ici toutes celles qui sont englobées par la ligne fermée.

La figure 2 illustre le système à un instant ultérieur : les étiquettes E se sont déplacées, la plupart de celles du lot 4 ont quitté le champ d'interrogation 3 mais d'autres y ont pénétré. L'identification des étiquettes E n'a porté, depuis l'instant de la figure 1, que sur celles du lot 4 et il a fallu identifier au moins celles qui ont quitté le champ d'interrogation 3.

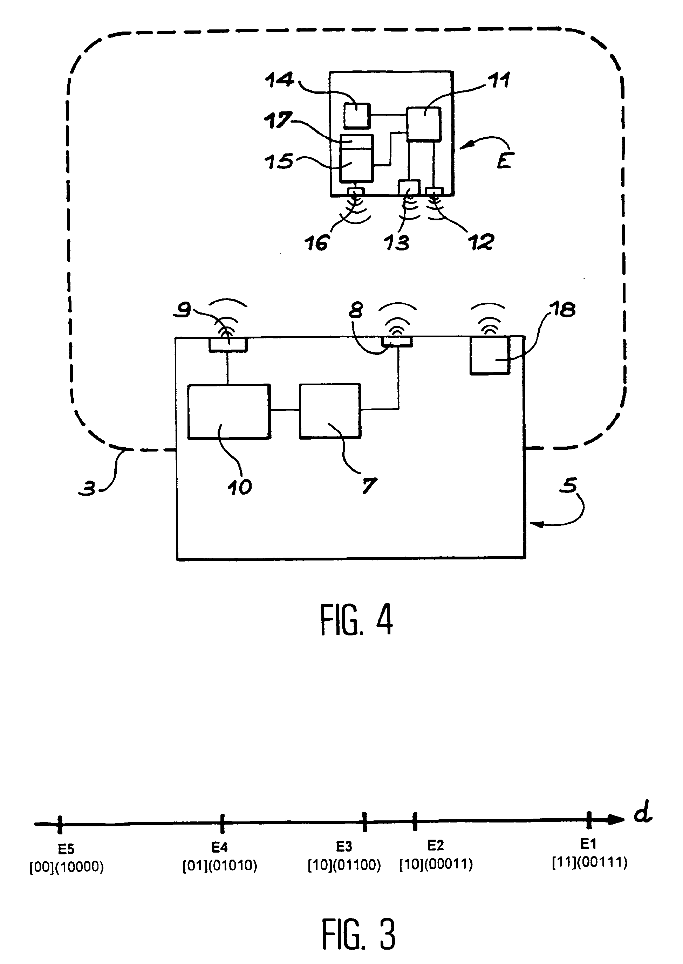

Les étiquettes E ont chacune, par exemple, un code numérique composé de cinq bits pour les identifier. Plaçons-nous dans l'hypothèse de la figure 3, où il reste cinq étiquettes notées E1 à E5 du lot 4 qui restent à identifier : les codes sont indiqués entre parenthèses sous chacune des étiquettes, qui ont été placées sur un axe qui indique la durée "d" depuis leur entrée dans le champ d'interrogation 3. L'étiquette E1 est entrée en premier, puis l'étiquette E2, et ainsi de suite jusqu'à l'étiquette E5. Ici, l'algorithme d'interrogation de base demande aux étiquettes E de réciter leur code bit par bit en commençant par celui de poids le plus fort. Comme les étiquettes émettent en même temps, en cas de conflit, les étiquettes émettant un « 0 » sont inhibées momentanément, ce qui fait qu'il y a identification d'abord de l'étiquette non encore lue qui a le code le plus important, soit successivement E5, E3, E4, E1 et E2. Les étiquettes E1 et E2 en particulier, présentes depuis plus longtemps et plus avancées dans le champ d'interrogation 3, échapperont à la détection si leur vitesse de traversée est trop rapide.

C'est pourquoi, conformément à l'invention, on complète l'algorithme de base en mesurant le temps de présence de chacune des étiquettes E dans le champ d'interrogation 3 et on exprime ce temps sous forme d'un élément de code supplémentaire, variable avec le temps, et qui permet d'interroger d'abord l'étiquette non encore lue qui a eu la présence la plus longue dans le champ d'interrogation 3. Ici par exemple, on exprime cette durée sous forme d'un nombre binaire à deux bits placés entre crochets sur la figure 3, et c'est ainsi que l'étiquette E1 est associée à cet instant à la durée 11, les étiquettes E2 et E3 à 10, car elles sont entrées quasi simultanément dans le champ d'interrogation, l'étiquette E4 à 01 et l'étiquette E5 à 00. L'appareil interrogateur 5 traite donc E1, puis E3, puis E2 (qui est supposée avoir la même durée de présence que E3 mais a un code de valeur plus faible), puis E4 et enfin E5. Tout se passe comme si le code de chacune des étiquettes était complété par un fragment de code, représentant la durée de séjour dans le champ d'interrogation 3, et dont la valeur est prépondérante pour définir l'ordre d'interrogation ou d'identification. Il est évident que ce principe peut être appliqué à d'autres procédés d'identification : si on identifie d'abord l'étiquette au code ayant la valeur la plus faible, la durée de présence pourra être exprimée par la décroissance d'un nombre plutôt que par sa croissance comme c'est le cas ici ; et si on effectue une lecture en commençant par le bit, ou plus généralement le chiffre, de poids le moins significatif, la durée de présence pourra être exprimée par un nombre qui sera placé derrière le code et dont les chiffres seront placés dans l'ordre inverse : dans tous les cas, on lira d'abord l'étiquette au temps de présence le plus important.

La même façon de procéder peut être adoptée pour des procédés d'identification autres que par lots, et pour des procédés où les étiquettes sont interrogées séquentiellement (le temps de présence est utilisé pour affecter un temps d'émission à chaque étiquette), puisque le principe reste le même : compter le temps de présence et interroger les étiquettes arrivées le plus tôt.

Quand une étiquette a été identifiée, on peut bloquer son compteur de temps de présence ou le laisser évoluer jusqu'à saturation, ce qui peut être utile si d'autres transactions doivent être faites plus tard, puisqu'il sera possible de les ordonner encore d'après le temps de présence. Par ailleurs, l'appareil interrogateur peut mémoriser l'ordre d'arrivée des étiquettes dans le champ d'interrogation. Dans tous les cas, le compteur de temps de présence ne doit pas être réinitialisé tant que l'étiquette est présente dans le champ d'interrogation.

Le procédé conforme à l'invention augmente sensiblement la cadence de passage des étiquettes E qu'il est possible d'adopter : en revenant à la figure 2, on désigne par la référence 6 le lot suivant le lot 4, et qui comportera toutes les nouvelles étiquettes E qui seront alors présentes dans le champ d'interrogation 3. La première étiquette E6 du lot 6, entrée très peu de temps après la formation du lot 4, sera examinée la première d'après l'invention, et pourra donc être située presque à la sortie du champ d'interrogation 3 quand le lot 6 aura été formé ; avec des procédés usuels où des étiquettes du lot 6 sont identifiées dans un ordre inconnu, l'étiquette E6 aurait risqué d'être identifiée en dernier, et aurait donc dû ne pas avoir dépassé la première moitié du champ d'interrogation 3 à la fin de la séquence d'identification du lot 4. Dans cette situation où l'on suppose que les étiquettes E se déplacent toutes à une même vitesse connue, l'invention permet de doubler la vitesse de passage possible pour les étiquettes E ; un bénéfice important peut aussi être attendu si les étiquettes E peuvent se déplacer à des vitesses différentes ou variables.

Il convient maintenant de décrire succinctement le dispositif utilisé, et qui est représenté à la figure 4. L'appareil interrogateur 5 comprend classiquement un générateur de signaux 7 émettant des signaux dans le champ d'interrogation 3 par l'intermédiaire d'un émetteur 8, et il comprend aussi au moins un récepteur 9 recueillant les signaux émis par les étiquettes E et relié à un dispositif de lecture 10 qui analyse les signaux reçus et permet d'en renvoyer d'autres vers les étiquettes E par l'intermédiaire du générateur de signaux 7, pour compléter les transactions nécessaires. Les étiquettes E comprennent un dispositif de contrôle 11 relié à un récepteur 12 et à un émetteur 13 qui communiquent respectivement à l'émetteur 8 et au récepteur 9 du dispositif d'interrogation 5, ainsi qu'une mémoire 14 qui contient le code de l'étiquette E et que le dispositif de contrôle 11 peut lire et transmettre à l'appareil interrogateur 5. Une autre mémoire peut être ajoutée pour contenir d'autres informations qui pourront faire l'objet de la transaction. De plus, chaque étiquette E comprend un compteur 15, affecté à la mesure du temps, qui dépend d'un récepteur 16 sensible à un signal radiofréquence fourni par un dispositif émetteur 18 idoine de l'appareil interrogateur 5. Dès que l'étiquette E pénètre dans le champ d'interrogation 3, le compteur 15 reçoit les impulsions issues du signal radiofréquence, ce qui lui impose de s'initialiser et de démarrer en comptant ces impulsions. Il peut fonctionner comme un diviseur de fréquence, c'est-à-dire que son comptage n'est modifié d'une unité que quand un nombre déterminé d'impulsions de radiofréquence lui est parvenu. Quoi qu'il en soit, il est relié aussi au dispositif de contrôle 11, qui peut lire et mémoriser temporairement son contenu.

La base de temps peut aussi être placée sur les étiquettes E : le compteur 15 sera alors sensible au signal d'un oscillateur interne 17 qui lui est relié.

Quoique l'invention ait été conçue pour l'identification par la lecture d'un code, elle peut aussi s'appliquer à la lecture de toute information sur les étiquettes E dans un ordre judicieux. Dans ce cas, après identification des étiquettes, il est avantageux que l'appareil interrogateur mémorise lui aussi les temps de présence des étiquettes.

Dans le cas d'objets se déplaçant grâce à un tapis roulant ou un autre moyen permettant un déplacement linéaire et identique des étiquettes, l'invention permet aussi de positionner les étiquettes les unes par rapport aux autres, information importante lorsqu'un tri physique est nécessaire après identification.

On a supposé ici que les lots 4 et 6 étaient distincts ; ils pourraient aussi présenter une partie commune si le lot 6 est défini avant que toutes les étiquettes du lot 4 n'aient été identifiées.

## Revendications

1. Procédé d'identification individuelle d'étiquettes (E) dotées chacune d'un code particulier, où les étiquettes peuvent passer en groupe dans un champ d'interrogation (3) d'un appareil interrogateur et où l'appareil interrogateur (5) lit le code de chacune des étiquettes du groupe, **caractérisé en ce que** chaque étiquette du groupe subit une initialisation et un démarrage d'un compteur (15) de temps de présence en entrant dans le champ d'interrogation (13), et **en ce que** les temps de présence des étiquettes du groupe sont comptés, et l'appareil interrogateur lit d'abord le code de l'étiquette qui a le temps de présence le plus long parmi les étiquettes non identifiées.

2. Procédé selon la revendication 1, le déplacement étant linéaire et identique pour toutes les étiquettes, procédé comportant en outre une étape de localisation, sur l'axe de déplacement, des étiquettes identifiées selon leur temps de présence.

3. Procédé selon la revendication 1 ou 2, **caractérisé en ce que** l'interrogation porte sur des lots (4) d'étiquettes successifs du groupe, les lots pouvant être modifiés en taille et en contenu après l'identification d'au moins une étiquette.

4. Procédé selon la revendication 1, 2 ou 3, **caractérisé en ce que** les temps de présence sont exprimés sous forme numérique comme les codes, et **en ce que** l'ensemble interrogateur lit, pour chacune des étiquettes, le temps de présence et le code comme un nombre unique composé de chiffres, les chiffres associés au temps de présence étant prépondérants pour décider de l'ordre de lecture des étiquettes.

5. Procédé selon la revendication 1, 2 ou 3, où chaque étiquette émet son code d'identification en entier pendant un intervalle de temps qui lui a été alloué et dont le numéro d'ordre est défini prioritairement en fonction du temps de présence de l'étiquette dans le champ d'interrogation.

6. Système d'identification individuelle d'étiquettes, comprenant un appareil interrogateur et des étiquettes (E), dotées chacune d'un code particulier, des moyens d'émission et de réception (8, 9, 12, 13) de signaux étant compris sur l'appareil interrogateur et chacune des étiquettes, **caractérisé en ce que** chaque étiquette comprend un compteur de temps (15) initialisé et démarrant lorsqu'il pénètre dans un champ d'interrogation de l'appareil interrogateur, et des moyens (11) pour sauvegarder temporairement les temps de présence dans ledit champ.

7. Système selon la revendication 6, **caractérisé en ce que** le compteur de temps comporte un diviseur de fréquence d'un signal.

8. Système selon la revendication 7, **caractérisé en ce que** le signal est fourni par l'appareil interrogateur.

## Patentansprüche

1. Verfahren zur Einzelidentifizierung von Etiketten (E), die jeweils mit einem speziellen Code versehen werden, wobei die Etiketten als Gruppe in ein Abfragefeld (3) eines Abfragegerätes gelangen können und wobei das Abfragegerät (5) den Code jedes der Etiketten der Gruppe liest, **dadurch gekennzeichnet, dass** jedes Etikett der Gruppe, wenn es in das Abfragefeld (13) gelangt, eine Initialisierung erfährt und ein Zähler (15) der Anwesenheitszeit gestartet wird, und dass das Abfragegerät zunächst den Code des Etiketts liest, welches die längste Anwesenheitszeit der noch nicht identifizierten Etiketten aufweist.

2. Verfahren nach Anspruch 1, wobei die Verlagerung linear und für alle Etiketten identisch ist, wobei das Verfahren ferner einen Schritt der Lokalisierung der nach ihrer Anwesenheitszeit identifizierten Etiketten auf der Verlagerungsachse umfasst.

3. Verfahren nach Anspruch 1 oder 2, **dadurch gekennzeichnet, dass** die Abfrage Sätze (4) von aufeinanderfolgenden Etiketten der Gruppe betrifft, wobei die Größe und der Inhalt der Sätze nach der Identifizierung wenigstens eines Etiketts verändert werden können.

4. Verfahren nach Anspruch 1, 2 oder 3, **dadurch gekennzeichnet, dass** die Anwesenheitszeiten wie die Codes digital angegeben werden, und dass das Abfragemodul für jedes der Etiketten die Anwesenheitszeit und den Code als aus Ziffern zusammengesetzte eindeutige Zahl liest, wobei die der Anwesenheitszeit zugeordneten Ziffern ausschlaggebend für die Entscheidung über die Lesereihenfolge der Etiketten sind.

5. Verfahren nach Anspruch 1, 2 oder 3, wobei jedes Etikett seinen Identifizierungscode während eines Zeitintervalls, welches ihm zugeordnet wurde und dessen Ordnungsnummer primär abhängig von der Anwesenheitszeit des Etiketts im Abfragefeld bestimmt wird, vollständig sendet.

6. System zur Einzelidentifizierung von Etiketten, umfassend ein Abfragegerät und Etiketten (E), die jeweils mit einem speziellen Code versehen sind, Sende- und Empfangsmittel (8, 9, 12, 13) für Signale des Abfragegeräts und jedes Etiketts, **dadurch gekennzeichnet, dass** jedes Etikett einen Zeitzähler (15) umfasst, der initialisiert wird und startet, wenn er in ein Abfragefeld des Abfragegeräts gelangt, und Mittel (11) zum vorübergehenden Speichern der Anwesenheitszeiten in diesem Feld.

7. System nach Anspruch 6, **dadurch gekennzeichnet, dass** der Zeitzähler einen Frequenzteiler eines Signals umfasst.

8. System nach Anspruch 7, **dadurch gekennzeichnet, dass** das Signal von dem Abfragegerät stammt.

## Claims

1. Method for the individual identification of labels (E), each having a particular code, where the labels can pass in group form into an interrogation field (3) of an interrogating device (5) and where the interrogating device reads the code of each of the labels of the group, **characterized in that** each label of the group undergoes an initialization and a starting up of a presence time counter (15) on entering the interrogation field (13), and **in that** the presence times of the labels of the group are counted, and the interrogating device firstly reads the code of the label having the longest presence time among the unidentified labels.

2. Method according to claim 1, the displacement being linear and identical for all the labels, said method also including a location stage on the displacement axis of the labels identified as a function of their presence time.

3. Method according to claim 1 or 2, **characterized in that** the interrogation relates to successive label batches (4) of the group, it being possible to modify the size and content of the batches following the identification of at least one label.

4. Method according to claim 1, 2 or 3, **characterized in that** the presence times are expressed in digital form as codes and **in that** the interrogating device reads, for each of the labels, the presence time and the code as a single number formed from digits, the digits associated with the presence time being preponderant for deciding the label reading order.

5. Method according to claim 1, where each label transmits its entire identification code during a time interval allocated to it and whose order number is defined in priority form as a function of the presence time of the label in the interrogation field.

6. System for the individual identification of labels, comprising an interrogating device and labels (E), each having a particular code, transmission and reception means (8, 9, 12, 13) for signals being comprised on the interrogating device and each of the labels, **characterized in that** each label incorporates a time counter (15) initialized and starting when it enters the interrogation field and means (11) for reading the time counter (15) and temporarily saving the presence time.

7. System according to claim 6, **characterized in that** the time counter incorporates a signal frequency divider.

8. System according to claim 7, **characterized in that** the signal is supplied by the interrogating device.
